# EUROPEAN PATENT APPLICATION

(11) **EP 4 520 627 A1**
(43) Date of publication of application: **12.03.2025**
(21) Application number: 24199143.9
(22) Date of filing: 09.09.2024
(51) Int. Cl.: B62B 3/06, B62B 5/00, B66F 9/06

(54) **LIFTER SUPPORTING DEVICE**

(30) Priority: 11.09.2023 IN 202311061106
(71) Applicant: NOVUS HI-TECH ROBOTIC SYSTEMZ PRIVATE LTD, 122001 Gurgaon Haryana (IN)
(72) Inventor: KAPURIA, Anuj, 122001 Gurugram (IN)
(74) Representative: Hafner & Kohl PartmbB

(57) **Abstract**

A lifter-supporting device is disclosed. The device (100) includes a housing (102), a pair of loading pallets (314), a gearbox (104, a drive motor (106), a sliding block (108), a linkage unit (110), and at least two limit switches (112). The gearbox (104) is placed on an upper portion and the drive motor 106 is arranged at a distal end of the housing (102). The sliding block (108) is attached to the gearbox (104) for sliding in a horizontal direction over a lead screw (206). The linkage unit (110) is disposed between the housing (102) and each of the pair of loading pallets (314) for uplifting the pair of loading pallets (314). The at least two limit switches (112) decide an upper loading limit and a lower loading limit for the pair of loading pallets (314). A lifter (300) includes a mounting frame (304), a plurality of sensors (306) with a camera (308), an antenna assembly (310), a user panel (312), the housing (1029 of a lifter supporting device (100), and a control unit.

## Description

### FIELD OF THE INVENTION

Embodiments of the present invention relate to the field of transporting goods and more particularly to a lifter-supporting device for carrying a high load to move the goods from one location to another more efficiently.

### BACKGROUND OF THE INVENTION

A lifter is a multiple-wheeled vehicle that loads and unloads pallet goods to transfer the goods from one place to another. The lifter is divided into two parts, a body, and a linkage unit. The linkage unit is disposed inside the body of the lifter to uplift the goods in a particular direction.

The conventional lifter (i.e. a forklift) has various types, but most of the existing forklift adopts an integral lifting mechanism for uplifting the pallet goods. The integral lifting mechanism is a part of the conventional linkage unit that is attached to a supporting structure part of the conventional lifter. But, these mechanisms are often troublesome. The weight of the goods that have to be transported puts pressure on the connecting point of the lifting unit. The pressure on the connecting point of the lifting unit may increase when the goods are overweight, as a result the connecting points become feeble and break. When the overweight goods are transported, it also damages the linkage unit because they use the conventional linkage mechanism to link the pallets with the lifter

Since the linkage unit does not have an appropriate linkage mechanism to carry the overweight transported goods. Therefore, this linkage mechanism causes damage to the lifter structure. Some of the known or existing lifting mechanism for moving goods includes a base, a lifting pantograph of scissor type, a lifting platform, and a drive that further includes a power hydraulic cylinder. But this lifting mechanism has chances of leakage of oil, complicated mechanical structure, high maintenance cost, and low flexibility.

Another example is CN111874837A discloses a support device for forklift is provided. The invention discloses a supporting device for a forklift, which comprises, the fixed supporting leg comprises a fixed supporting part parallel to the horizontal plane and a sliding rail vertically and fixedly connected with the fixed supporting part, the sliding supporting leg is connected with the sliding rail in a sliding manner and comprises a sliding supporting part and a sliding part fixedly connected with the sliding supporting part vertically, the sliding part is connected with the second sliding rail in a sliding manner, and the sliding supporting part comprises two sliding supporting rods which are parallel to each other and vertical to the sliding rail, the sliding support part and the fixed support part are positioned on the same side of the sliding rail, and the hydraulic rod is arranged between the two first guide rails and is parallel to the first guide rails, and the hydraulic rod drives the second slide rail to slide along the first slide rail in a telescopic manner. In the invention, the lifting height is divided into two sections, and the structural strength, stability, and safety of the lifting height and the passing ability of the forklift are improved.

Conventionally, there exist various devices that have a lifting unit for uplifting a pair of loading pallets in an industry. However, there is no specification of a linkage unit (a Scissor linkage type lifting unit) that is modularly disposed between a housing of a lifter-supporting device and each of the pair of loading pallets for uplifting the pair of loading pallets in a particular direction.

In order to overcome the aforementioned drawbacks, there is a need to provide a lifter-supporting device that is an enhancement to the conventional device. This device is designed with a high load-carrying capacity that is useful for uplifting the pair of loading pallets by using a scissor linkage mechanism.

### OBJECTS OF THE INVENTION

The principal object of the present invention is to overcome the disadvantage of the prior art.

Another object of the present invention is to provide a lifter-supporting device that has a linkage unit that is modularly fitted into the device for uplifting a pair of loading pallets in a particular direction (i.e. a vertical direction).

Another object of the present invention is to provide the lifter-supporting device that is designed with a high load-carrying capacity that is useful in moving the pair of loading pallets.

Another object of the present invention is to provide a lifter-supporting device that is designed with a simple structure, noiseless and flexible from a maintenance point of view.

Another object of the present invention is to provide a lifter that includes a camera that provides a driver a better view of their surroundings, which minimizes the risk of a collision with the other lifter.

Another object of the present invention is to provide the lifter-supporting device that may be fitted into a fork of any pallet mover for any industrial automation by using multiple arrangements of the device as per the requirement of a user.

Another object of the present invention is to provide the lifter-supporting device that helps in preventing damages, and accidents and therefore reduces costs.

### SUMMARY OF THE INVENTION

An embodiment of the present disclosure relates to a lifter supporting device. This device is easily fitted into a fork of any pallet mover for any industrial automation by using multiple arrangements of the device as per the requirement of a user. This device is designed with a high load carrying capacity that is useful in moving a pair of loading pallets.

In one general aspect, the device includes a housing, a pair of loading pallets, a gear box, a drive motor, a sliding block, a linkage unit, and at least two limit switches. Other embodiments of this aspect include corresponding architecture, apparatus, and computer programs recorded on one or more storage devices, each configured to perform the actions of the methods.

In accordance with an embodiment of the present invention, the housing is modularly attached inside the pair of loading pallets. Further, the pair of loading pallets are arranged on a lifter in an oscillating manner. Further, the housing is movable with the lifter. Further, the plurality of loading pallets supports goods in a stable manner while being lifted by the lifter.

In accordance with an embodiment of the present invention, the gear box is placed on an upper portion of the housing. Further, the drive motor is arranged at a distal end of the housing.

In accordance with an embodiment of the present invention, the drive motor transmits power to the gearbox through a plurality of chain links where a rotational motion gets converted into a linear motion.

In accordance with an embodiment of the present invention, the sliding block is attached to the gear box for sliding in a horizontal direction over a lead screw. Further, the linkage unit is disposed between the housing and each of the pair of loading pallets for uplifting the pair of loading pallets in a particular direction.

In accordance with an embodiment of the present invention, the linkage unit is a scissor linkage type lifting unit. Further, the scissor linkage type lifting unit includes a scissor linkage mechanism for uplifting the pair of loading pallets.

In accordance with an embodiment of the present invention, the linkage unit includes a first end and a second end. Further, the first end is fixed with the gearbox and the second end is sliding with the sliding block over the lead screw.

In accordance with an embodiment of the present invention, the lead screw with the gearbox slides the sliding block to transmit the power to the linkage unit to uplift the pair of loading pallets in the particular direction. Further, the particular direction is preferably a vertical direction.

In accordance with an embodiment of the present invention, the at least two limit switches are used for deciding an upper loading limit and a lower loading limit for the pair of loading pallets.

In accordance with another embodiment of the present invention, a lifter is disclosed. The lifter includes a mounting frame, a plurality of sensors with a camera, an antenna assembly, a user panel, a housing of a lifter supporting device, and a control unit. Further, the housing includes a pair of loading pallets, a gear box, a drive motor, a sliding block, a linkage unit, and at least two limit switches. Other embodiments of this aspect include corresponding architecture, apparatus, and computer programs recorded on one or more storage devices, each configured to perform the actions of the methods.

In accordance with an embodiment of the present invention, the mounting frame includes a front panel and a rear panel. Further, the plurality of sensors with a camera are mounted on the mounting frame.

In accordance with an embodiment of the present invention, the plurality of sensors is anyone of a navigation sensor, distance sensor, pallet detection sensor, or a safety sensor, alike. Further, the camera is anyone of a color camera, grayscale camera, and/or infrared camera.

In accordance with an embodiment of the present invention, the antenna assembly is secured in a fixed position on an upper portion of each side of the mounting frame for establishing wireless communication with a user interface. Further, the antenna assembly includes an antenna and an antenna tower. Further, the antenna is a communication antenna that is composed of a planar antenna having predetermined directivity characteristics.

In accordance with an embodiment of the present invention, the user panel is positioned below the antenna assembly on the front panel of the mounting frame. Further, the user panel is hard-wired to the antenna assembly through an electrical panel.

In accordance with an embodiment of the present invention, the housing of a lifter supporting device is modularly attached inside a pair of loading pallets. Further, the pair of loading pallets is assembled on the rear panel of the mounting frame.

In accordance with an embodiment of the present invention, the gear box is placed on an upper portion of the housing. Further, the drive motor is arranged at a distal end of the housing.

In accordance with an embodiment of the present invention, the sliding block is attached to the gear box for sliding in a horizontal direction over a lead screw. Further, the linkage unit is disposed between the housing and each of the pair of loading pallets for uplifting the pair of loading pallets in a particular direction.

In accordance with an embodiment of the present invention, the at least two limit switches are used for deciding an upper loading limit and a lower loading limit for the pair of loading pallets.

In accordance with an embodiment of the present invention, the control unit is installed inside the electrical panel of the mounting frame for controlling the operations of the lifter. Further, the lifter is a powered forklift vehicle that includes a front wheel and at least two rear wheels.

In accordance with an embodiment of the present invention, a battery is installed in a battery casing that is configured to the rear portion of the mounting frame.

These and other objects, embodiments and advantages of the present disclosure will become readily apparent to those skilled in the art from the following detailed description of the embodiments having reference to the attached figures, the disclosure not being limited to any particular embodiments disclosed.

### BRIEF DESCRIPTION OF THE DRAWINGS

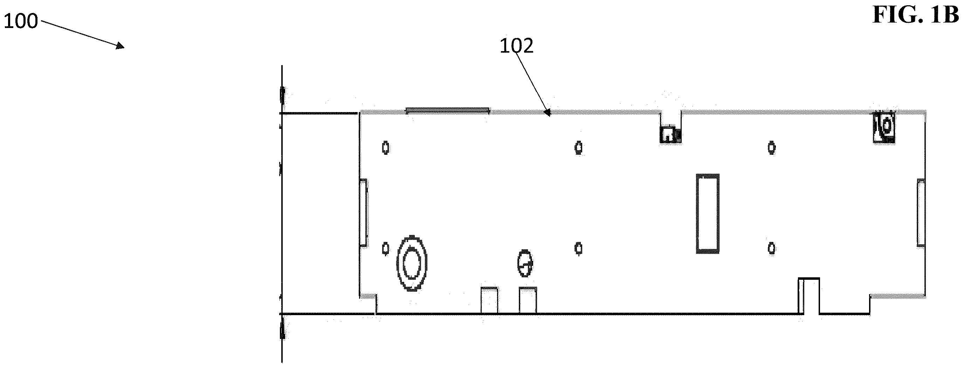

So that the manner in which the above recited features of the present invention is be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.
Fig.lA & fig. 1B illustrates a perspective view and a side view of a lifter supporting device 100 respectively, according to an embodiment of a present invention;
Fig. 2 illustrates a linkage unit 110 of the lifter supporting device 100, according to an embodiment of a present invention;
Fig. 3 illustrates a front panel 302 of a mounting frame 304 of a lifter 300, according to an embodiment of a present invention;
Fig. 4 illustrates a rear panel 402 of the mounting frame 304 of the lifter 300, according to an embodiment of a present invention; and
Fig. 5 illustrates a side view of the lifter 300, according to an embodiment of a present invention.

### DETAILED DESCRIPTION

The present invention relates to an autonomous vehicle transient warehouse system for providing convenient and delay-free collection and delivery of the items which are requested or ordered by an item requester. The users do not have to worry and waste their time in sending the items to the warehouse for further dispatch, on the contrary, the warehouse itself goes to the location of the requester to collect or deliver the parcel which is way more convenient than the conventional method.

Embodiments of the present disclosure will be described more fully hereinafter with reference to the accompanying drawings in which, like numerals represent like elements throughout the several figures, and in which example embodiments are shown. Embodiments of the claims may, however, be embodied in many different forms and should not be construed as limited to the embodiments set forth herein. The examples set forth herein are non-limiting examples and are merely examples among other possible examples.

Some embodiments of this invention, illustrating all its features, will now be discussed in detail. The words "comprising," "having," "containing," and "including," and other forms thereof, are intended to be equivalent in meaning and be open ended in that an item or items following any one of these words is not meant to be an exhaustive listing of such item or items or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present invention, the preferred systems and methods are now described.

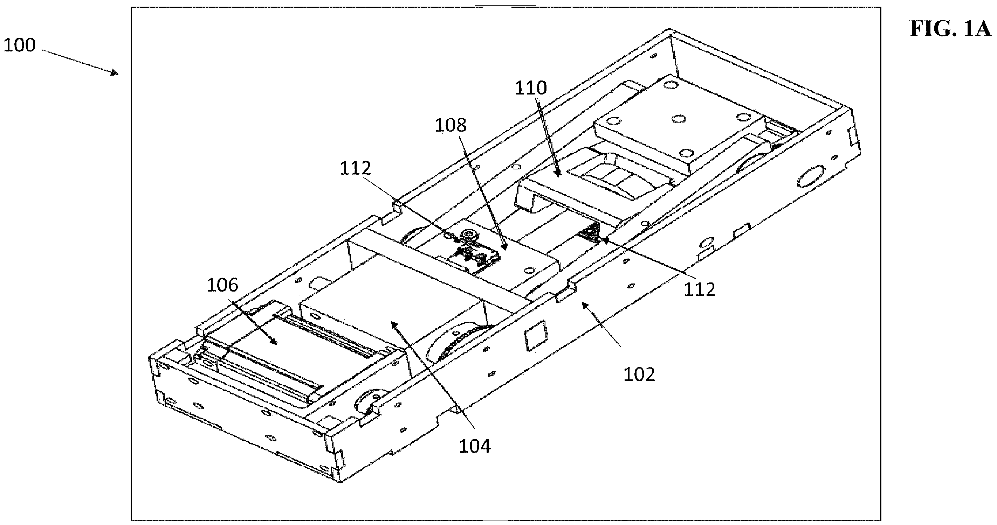

Fig.1A & fig. 1B illustrate a perspective view and a side view of a lifter supporting device 100 respectively, according to an embodiment of a present invention.

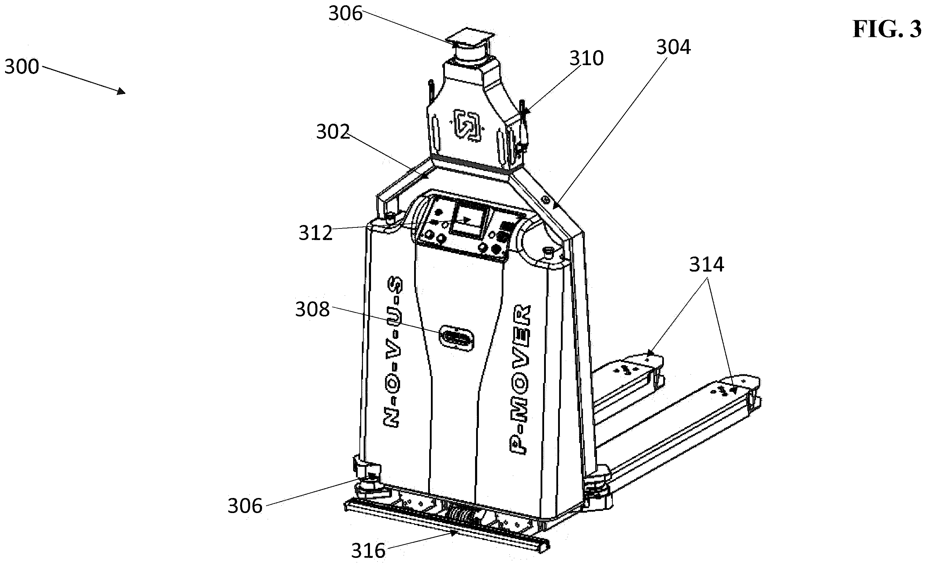

In one general aspect, the device 100 includes a housing 102, a pair of loading pallets 314 (refer fig.3), a gear box 104, a drive motor 106, a sliding block 108, a linkage unit 110, and at least two limit switches 112. Other embodiments of this aspect include corresponding architecture, apparatus, and computer programs recorded on one or more storage devices, each configured to perform the actions of the methods.

In accordance with an embodiment of the present invention, the housing 102 is modularly attached inside the pair of loading pallets 314. Further, the pair of loading pallets 314 are arranged on a lifter 300 (refer fig.3) in an oscillating manner. Further, the housing 102 is movable with the lifter 300. Further, the pair of loading pallets 314 supports goods in a stable manner while being lifted by the lifter 300.

In accordance with an embodiment of the present invention, the gear box 104 is placed on an upper portion of the housing 102. Further, the drive motor 106 is arranged at a distal end of the housing 102.

In accordance with an embodiment of the present invention, the drive motor 106 transmits power to the gearbox 104 through a plurality of chain links where a rotational motion gets converted into a linear motion.

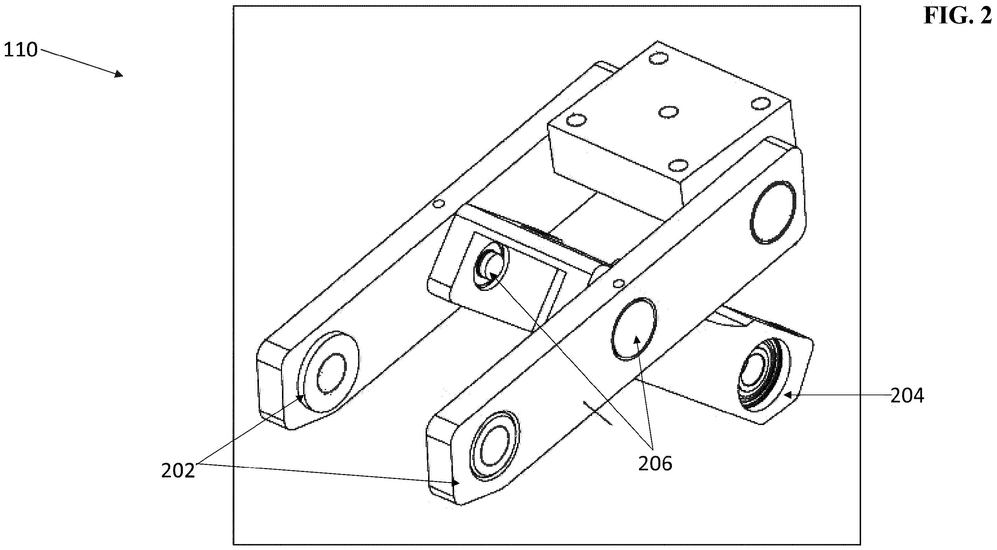

In accordance with an embodiment of the present invention, the sliding block 108 is attached to the gear box 104 for sliding in a horizontal direction over a lead screw 206 (refer fig.2). Further, the linkage unit 110 is disposed between the housing 102 and each of the pair of loading pallets 314 for uplifting the pair of loading pallets 314 in a particular direction.

In accordance with an embodiment of the present invention, the at least two limit switches 112 are used for deciding an upper loading limit and a lower loading limit for the pair of loading pallets 314.

In accordance with an embodiment of the present invention, the lifter supporting device 100 is designed with a load carrying capacity that is useful for uplifting the pair of loading pallets 314 in an industry. Further, the load carrying capacity is in the range of 3 KN to 5 KN. Further, the linkage unit 110 maximum travels up to 90mm in a less amount of time.

Fig. 2 illustrates the linkage unit 110 of the lifter supporting device 100, according to an embodiment of a present invention. The linkage unit 110 is a scissor linkage type lifting unit. Further, the scissor linkage type lifting unit includes a scissor linkage mechanism for uplifting the pair of loading pallets 314 (refer fig.3).

In accordance with an embodiment of the present invention, the linkage unit 110 includes a first end 202 and a second end 204. Further, the first end 202 is fixed with the gearbox 104 and the second end 204 is sliding with the sliding block 108 over the lead screw 206.

In accordance with an embodiment of the present invention, the lead screw 206 with the gearbox 104 slides the sliding block 108 to transmit the power to the linkage unit 110 to uplift the pair of loading pallets 314 in the particular direction. Further, the particular direction is preferably a vertical direction.

Fig. 3 illustrates a front panel 302 of a mounting frame of 304 a lifter 300, according to an embodiment of a present invention. The lifter 300 includes the mounting frame 304, a plurality of sensors 306 with a camera 308, an antenna assembly 310, a user panel 312, a housing 102 of a lifter supporting device 100 is attached to a pair of loading pallets 314 of the lifter 300, and a control unit (not shown in image). Other embodiments of this aspect include corresponding architecture, apparatus, and computer programs recorded on one or more storage devices, each configured to perform the actions of the methods.

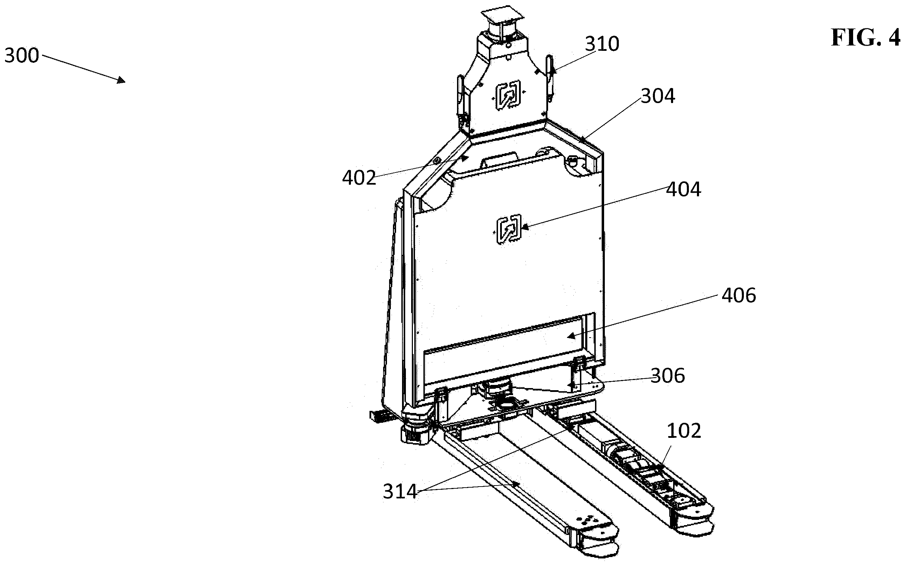

In accordance with an embodiment of the present invention, the mounting frame 304 includes the front panel 302 and a rear panel 402 (refer fig.4). Further, the plurality of sensors 306 with the camera 308 are mounted on the mounting frame 304.

In accordance with an embodiment of the present invention, the plurality of sensors 306 is anyone of a navigation sensor, distance sensor, pallet detection sensor, or a safety sensor, alike. Further, the camera 308 is anyone of a color camera, grayscale camera, and/or infrared camera.

In accordance with an exemplary embodiment of the present invention, the plurality of sensors 306 are used for searching the goods that have to be transported, navigation purpose, and calculating the distance between a source location and a destination location, among others.

In accordance with another exemplary embodiment of the present invention, the camera 308 helps in finding a blind spot when the lifter 300 moves forward because a front area is completely obscured when the lifter 300 is carrying a load, which causes many blind spots. So, the camera 308 increases safety because the camera 308 provides a driver a clear view of the floor in front of the lifter 300. The camera 308 also provides a view of obstacles and of areas that would otherwise be blind spots, helping to prevent accidents.

In accordance with an embodiment of the present invention, the antenna assembly 310 is secured in a fixed position on an upper portion of each side of the mounting frame 304 for establishing wireless communication with a user interface. Further, the antenna assembly 310 includes an antenna and an antenna tower. Further, the antenna is a communication antenna that is composed of a planar antenna having predetermined directivity characteristics.

In accordance with an embodiment of the present invention, the user panel 312 is positioned below the antenna assembly 310 on the front panel 302 of the mounting frame 304. Further, the user panel 312 is hard-wired to the antenna assembly 310 through an electrical panel 404 (refer fig.4).

In accordance with an embodiment of the present invention, the user panel 312 is anyone of a UCI panel, an HMI panel, a display screen, a touch-button, an audible voice, or a voice synthesis, alike. Further, the user interface is any one of a mobile, a laptop, or a desktop, alike.

In accordance with an embodiment of the present invention, a bumper 316 is attached to the lifter 300 to prevent damage to products such as metal, wood, drywall, furniture, bottles, cans, appliances, and electronics. The bumpers 316 are generally made of soft PVC plastic that absorbs energy to prevent damage.

Fig. 4 illustrates the rear panel 402 of the mounting frame 304 of the lifter 300, according to an embodiment of a present invention. The rear panel 402 includes the housing 102, the plurality of sensors 306, the antenna assembly 310, the electrical panel 404, and a battery 406. Further, the housing 102 includes the pair of loading pallets 314, a gear box 104, a drive motor 106, a sliding block 108, a linkage unit 110, and at least two limit switches 112.

In accordance with an embodiment of the present invention, the housing 102 of the lifter supporting device 100 is modularly attached inside the pair of loading pallets 314. Further, the pair of loading pallets 314 is assembled on the rear panel 402 of the mounting frame 304. Further, the pair of loading pallets 314 supports goods in a stable manner while being lifted by the lifter 300.

In accordance with an embodiment of the present invention, the gear box 104 is placed on an upper portion of the housing 102. Further, the drive motor 106 is arranged at a distal end of the housing 102.

In accordance with an embodiment of the present invention, the sliding block 108 is attached to the gear box 104 for sliding in a horizontal direction over a lead screw 206. Further, the linkage unit 110 is disposed between the housing 102 and each of the pair of loading pallets 314 for uplifting the pair of loading pallets 314 in a particular direction. Further, the particular direction is a vertical direction.

In accordance with an embodiment of the present invention, the at least two limit switches 112 are used for deciding an upper loading limit and a lower loading limit for the pair of loading pallets 314.

In accordance with an embodiment of the present invention, the control unit is installed inside the electrical panel 404 of the mounting frame 304 for controlling the operations of the lifter 300.

The control unit may include one or more circuits, digital logic units, computer chips, and/or microprocessors configured to interface between any combination of the mechanical components, the plurality of sensors 306, the battery 406, the camera 308, the user panel 312, and/or a user of the lifter 300. In some embodiments, the control unit may be a dedicated embedded device for performing specific operations with one or more subcomponents of the lifter 300.

The control unit may serve as a link between portions of the lifter 300, such as between a mechanical component and/or an electronic component. In some cases, the control unit may serve as an interface between the lifter 300 and another lifter 300 present in an industrial location. For example, the control unit may include various components for communicating with the components of the lifter 300, including joysticks, buttons, and/or ports, among others. The above-mentioned example interfaces and communications may be implemented via wired or wireless connections, or both.

In some embodiments, the control unit may also include a communication link that is configured to transmit and/or receive information. The communication link may transmit data indicative of the status of various components of the lifter 300. For example, information read by the plurality of sensors 306 or the camera 308 may be sent to a separate device component via the communication link. Other diagnostic information indicative of the integrity or health of the battery 306, mechanical components, and electronic components, may be transmitted to the external communication device via the communication link.

In accordance with an embodiment of the present invention, the battery 406 is installed in a battery casing that is configured to the rear portion 402 of the mounting frame 304. Further, the battery 406 is anyone of a Lithium-ion battery, a Lithium-ion lithium cobalt oxide battery (ICR) Lithium-silicon battery, Ni-Cd (Nickel Cadmium) battery, among others.

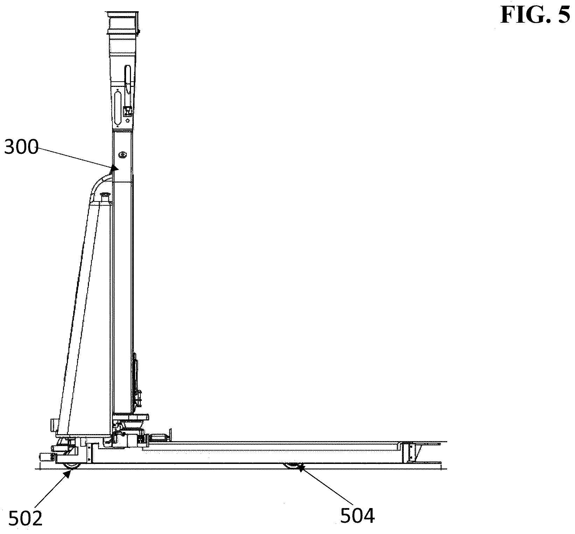

Fig. 5 illustrates a side view of the lifter 300, according to an embodiment of a present invention. The lifter 300 is a powered forklift vehicle that includes a front wheel 502 and at least two rear wheels 504. Further, the lifter 300 may be an ABOPT (AUTONOMOUS BATTERY-OPERATED PALLET TRUCK). The ABOPT is free to move in both directions either a forward or a reverse direction.

In accordance with an embodiment of the present invention, the front wheel 502 is a castor wheel or a swivel castor wheel. Further, the at least two rear wheels 504 are a rigid and a heavy load wheel. The weight of the ABOPT is lies in the range of 300 to 350 kg, more specifically, 350 kg (Kilogram). The length, width, and height of the ABOPT is lies in the range of 1600-1700 mm, 900-1000 mm, and 1800-1900 mm respectively, more specifically 1600 mm, 930 mm, and 1850 mm (millimeter).

In accordance with an advantageous embodiment of the present invention, the device 100 may be fitted into a fork of any pallet mover for any industrial automation by using multiple arrangements of the device 100 as per the requirement of the user.

In accordance with another advantageous embodiment of the present invention, this invention provides the linkage unit 110 that is modularly fitted into the device 100 for uplifting the pair of loading pallets 314 in the particular direction (i.e. the vertical direction). Further, the linkage unit 110 is the most compact ecofriendly and noiseless linkage unit 110. Further, the present device 100 is designed with a high load-carrying capacity that is useful in moving the pair of loading pallets 314.

In accordance with another advantageous embodiment of the present invention, the device 100 is designed with a simple structure, noiseless and flexible from a maintenance point of view.

In accordance with another advantageous embodiment of the present invention, the camera 308 of the lifter 300 provides the driver a better view of their surroundings, which minimizes the risk of a collision with the other lifter 300. This device 100 helps in preventing damages, and accidents and therefore reduces costs.

It should be noted that the invention has been described with reference to particular embodiments and that the invention is not limited to the embodiments described herein.

Embodiments are described at least in part herein with reference to flowchart illustrations and/or block diagrams of methods, systems, and computer program products and data structures according to embodiments of the disclosure. It will be understood that each block of the illustrations, and combinations of blocks, can be implemented by computer program instructions. These computer program instructions may be provided to a processor of a general-purpose computer, special purpose computer, or other programmable data processing apparatus to produce a machine such that the instructions, which execute via the processor of the computer or other programmable data processing apparatus, create means for implementing the functions/acts specified in the block or blocks.

### ELEMENT LIST

Lifter Supporting Device 100
Housing 102
Gearbox 104
Drive Motor 106
Sliding Block 108
Linkage Unit 110
At least two limit switches 112
First end 202
Second end 204
Lead Screw 206
Lifter 300
Front panel 302
Mounting frame 304
A plurality of sensors 306
Camera 308
Antenna Assembly 310
User Panel 312
A pair of loading Pallets 314
Bumper 316
Rear Panel 402
Electrical panel 404
Battery 406
Front wheel 502
At least two rear wheels 504

## Claims

1. A lifter supporting device, comprising:
a housing (102) modularly attached inside a pair of loading pallets (314), wherein the pair of loading pallets (314) arranged on a lifter (300) in an oscillating manner;
a gear box (104) placed on an upper portion of the housing (102);
a drive motor (106) arranged at a distal end of the housing (102);
a sliding block (108) attached to the gear box (104) for sliding in a horizontal direction over a lead screw (206);
a linkage unit (110) disposed between the housing (102) and each of the pair of loading pallets (314) for uplifting the pair of loading pallets (314) in a particular direction; and
at least two limit switches (112) for deciding an upper lifting limit and a lower lifting limit for the pair of loading pallets (314).

2. The lifter supporting device (100) as claimed in claim 1, wherein the linkage unit 110 is a scissor linkage type lifting unit.

3. The lifter supporting device (100) as claimed in claim 2, wherein the scissor linkage type lifting unit includes a scissor linkage mechanism for uplifting the pair of loading pallets (314).

4. The lifter supporting device (100) as claimed in claim 1, wherein the housing (102) is movable with the lifter (300).

5. The lifter supporting device (100) as claimed in claim 1, wherein the plurality of loading pallets (314) supports goods in a stable manner while being lifted by the lifter (300).

6. The lifter supporting device (100) as claimed in claim 1, wherein the linkage unit (110) includes a first end (202) and a second end (204).

7. The lifter supporting device (100) as claimed in claim 6, wherein the first end (202) is fixed with the gearbox (104) and the second end (204) is sliding with the sliding block (108) over the lead screw (206).

8. The lifter supporting device (100) as claimed in claim 1, wherein the drive motor 106 transmits power to the gearbox (104) through a plurality of chain links where a rotational motion gets converted into a linear motion.

9. The lifter supporting device (100) as claimed in claim 1, wherein the lead screw 206 with the gearbox (104) slides the sliding block (108) to transmit the power to the linkage unit (110) to uplift the pair of loading pallets (314) in the particular direction that is preferably a vertical direction.

10. A lifter, comprising:
a mounting frame (304), wherein the mounting frame (304) includes a front panel (302) and a rear panel (402);
a plurality of sensors (306) with a camera (308) mounted on the mounting frame (304);
an antenna assembly (310) secured in a fixed position on an upper portion of each side of the mounting frame (304) for establishing wireless communication with a user interface;
a user panel (312) positioned below the antenna assembly (310) on the front panel (302) of the mounting frame (304), wherein the user panel (312) is hard-wired to the antenna assembly (310) through an electrical panel (404);
a housing (102) of a lifter supporting device (100) modularly attached inside a pair of loading pallets (314), wherein the pair of loading pallets (314) is assembled on the rear panel (402) of the mounting frame (304), wherein the housing (102) comprising:
a gear box (104) placed on an upper portion of the housing (102);
a drive motor (106) arranged at a distal end of the housing (102);
a sliding block (108) attached to the gear box (104) for sliding in a horizontal direction over a lead screw (206);
a linkage unit (110) disposed between the housing (102) and each of the pair of loading pallets (314) for uplifting the pair of loading pallets (314) in a particular direction; and
at least two limit switches (112) for deciding an upper lifting limit and a lower lifting limit for the pair of loading pallets (314); and
a control unit installed inside the electrical panel (404) of the mounting frame (304) for controlling the operations of the lifter (300).

11. The lifter (300) as claimed in claim 10, wherein the lifter (300) is a powered forklift vehicle that includes a front wheel (502) and at least two rear wheels (504).

12. The lifter (300) as claimed in claim 10, wherein the plurality of sensors (306) is anyone of a navigation sensor, distance sensor, pallet detection sensor, or a safety sensor, alike.

13. The lifter (300) as claimed in claim 10, wherein the camera (308) is anyone of a color camera, grayscale camera, and/or infrared camera.

14. The lifter (300) as claimed in claim 10, wherein the antenna assembly (310) includes an antenna and an antenna tower.

15. The lifter (300) as claimed in claim 10, wherein a battery (406) is installed in a battery casing that is configured to the rear portion (402) of the mounting frame (304).
